(19) Europäisches Patentamt
European Patent Office
Office européen des brevets

(11) Veröffentlichungsnummer: **0 176 060**
**A2**

(12) # EUROPÄISCHE PATENTANMELDUNG

(21) Anmeldenummer: 85111969.3

(22) Anmeldetag: 21.09.85

(51) Int. Cl.[4]: C 08 L 71/04
C 08 L 25/04, C 08 L 25/10
C 08 L 53/02

(30) Priorität: 24.09.84 DE 3434975

(43) Veröffentlichungstag der Anmeldung:
02.04.86 Patentblatt 86/14

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Hambrecht, Juergen, Dr.
Werderstrasse 30
D-6900 Heidelberg(DE)

(72) Erfinder: Mueller, Wolfgang F., Dr.
Hahnenweg 20
D-6730 Neustadt(DE)

(72) Erfinder: Gerberding, Karl, Dr.
in der Dreispitz 9
D-6706 Wachenheim(DE)

(72) Erfinder: Schmitt, Burghard, Dr.
Braeunigstrasse 12
D-6520 Worms 24(DE)

(72) Erfinder: Boehlke, Klaus, Dr.
Gerhart-Hauptmann-Strasse 53
D-6717 Hessheim(DE)

(54) **Thermoplastische Formmassen.**

(57) Thermoplastische Formmasse auf der Grundlage von Polyphenylenethern oder Gemischen aus Polyphenylethern und Styrolpolymerisaten, die außerdem ein hydriertes statistisch aufgebautes Copolymerisat aus Styrol und Butadien sowie ein Blockpolymerisat aus Styrol und Butadien enthalten.

EP 0 176 060 A2

Thermoplastische Formmassen

Die Erfindung betrifft neue thermoplastische Formmassen auf der Grundlage von Polyphenylenether-Harzen, die gegebenenfalls Styrolpolymerisate enthalten können und die zur Verbesserung der Schlagzähigkeit und des Verarbeitungsverhaltens eine Kombination aus einem hydrierten statistisch aufgebauten Copolymerisat und einem hydrierten oder nichthydrierten Blockcopolymeren enthalten.

Polyphenylenether-Harze sind dem Fachmann als eine Klasse von Thermoplasten bekannt, die eine Reihe von hervorragenden physikalischen Eigenschaften besitzen. Sie können durch oxidative und nicht-oxidative Verfahren hergestellt werden, wie dies beispielsweise in den US-PS 3 306 875, 3 257 357 und 3 257 358 beschrieben worden ist. Es ist weiterhin bekannt, daß viele der Eigenschaften der Polyphenylenether-Harze, beispielsweise die Leichtigkeit der Verarbeitung, die Schlagfestigkeit und die Lösungsmittelbeständigkeit, verbessert werden können, indem man diese Harze mit anderen Harzen, wie z.B. mit Polystyrol, kombiniert. So sind z.B. thermoplastische Massen, die sich zur Herstellung von Formteilen eignen und die schlagzäh modifizierte Styrolpolymerisate und Polyphenylenether enthalten aus den US-PS 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend. Wünschenswert sind jedoch für spezielle Anwendungen eine verbesserte Schlagzähigkeit und beim Einsatz im Großspritzguß eine verbesserte Verarbeitbarkeit.

Zur Verbesserung der Schlagzähigkeit ist verschiedentlich vorgeschlagen worden, elastomere Blockmischpolymerisate zuzusetzen. Zum Stand der Technik nennen wir: (1) DE-AS 19 32 234, (2) DE-AS 20 00 118, (3) DE-OS 22 55 930, (4) DE-OS 27 50 515, (5) DE-OS 28 42 773, (6) DE-OS 24 34 848, (7) DE-OS 30 38 551, (8) EP 80 666, (9) WO 83/01 254.

In (1) bis (3) wird die Zugabe von unterschiedlich aufgebauten, vornehmlich aus vinylaromatischen und konjugierten Dienblöcken bestehenden Blockcopolymerisaten beschrieben. Diese Mischungen zeichnen sich durch eine verbesserte Schlagzähigkeit aus. Aufgrund der bei hohen Verarbeitungstemperaturen auftretenden Vernetzung dieser Blockcopolymerisate ist die Wirkung der zugesetzten Blockcopolymerisate nicht befriedigend. In der Folge ist deshalb in (4) bis (9) vorgeschlagen worden, hydrierte

vG/P

Blockcopolymerisate oder deren Mischung mit der nicht hydrierten Vorstufe als Schlagzähmodifier einzusetzen. Im wesentlichen werden dabei hydrierte Block- oder Teleblockcopolymerisate, bestehend aus einem vinylaromatischen Kohlenwasserstoffblock und einem hydrierten Blockteil, das durch Polymerisation eines konjugierten Diens, wie z.B. Butadien oder Isopren erhalten wurde, eingesetzt. Die Schlagzähigkeit dieser Polmermischungen ist weiter verbessert. Gleichzeitig wird jedoch durch Zugabe der Blockcopolymerisate die Wärmeformbeständigkeit abgesenkt. Nicht befriedigend bleibt das Verarbeitungsverhalten der Mischungen insbesondere im Großspritzguß.

Aufgabe der vorliegenden Erfindung war es deshalb, thermoplastische Formmassen auf der Grundlage von Polyphenylenethern oder Gemischen aus Polyphenylenethern und Styrolpolymerisaten zu schaffen, die zu Formteilen mit einer verbesserten Schlagzähigkeit bei gleichzeitig wenig veränderter hoher Wärmeformbeständigkeit verarbeitet werden können und deren Verarbeitungsverhalten wesentlich verbessert ist.

Diese Aufgabe wird erfindungsgemäß durch thermoplastische Formmassen auf der Grundlage von Polyphenylenethern (a) oder Gemischen aus Polyphenylenethern (a) und Styrolpolymerisaten (b) gelöst, die außerdem (c) ein hydriertes statistisch aufgebautes Copolymerisat aus 5 bis 60 Gew.-Teilen mindestens eines monoalkenylaromatischen Kohlenwasserstoffs, 95 bis 40 Gew.-Teilen eines konjugierten Diens sowie (d) ein Blockpolymerisat enthalten, das A-Blöcke enthält, die aus monoalkenylaromatischen Kohlenwasserstoffen aufgebaut sind und B-Blöcke enthält, die aus konjugierten Dienen aufgebaut sind.

Die Komponenten (c) können außer dem hydrierten statistisch aufgebautem Anteil einen blockförmig aufgebauten Anteil aus mindestens einem monealkenylaromatischen Kohlenwasserstoff enthalten. In den Komponenten (d) kann der von den Dienkohlenwasserstoffen herrührende B-Block hydriert sein.

Die Copolymerisate (c) können linear oder verzweigt aufgebaut sein und enthalten als gemeinsames Strukturmerkmal einen zentralen Copolymerisat-Anteil, der statistisch aufgebaut und hydriert ist. Dieser Anteil enthält 5 bis 40 Gew.-Teile, vorzugsweise 50 bis 30 Gew.-Teile Styrol, α-Methylstyrol, o- oder p-Methylstyrol und/oder p-tert.-Butylstyrol und 95 bis 60 Gew.-Teile, vorzugsweise 95 bis 70 Gew.-Teile Butadien, Isopren und/oder Pentadien. Die Gewichtsteile addieren sich jeweils zu 100. Das Copolymerisat (c) kann Polymerisat-Blöcke enthalten, die aus einem oder mehreren der genannten alkylaromatischen Kohlenwasserstoffen bestehen. In

dem Copolymerisat sind mindestens 95 % der ungesättigten Doppelbindung und praktisch keine der vinylaromatischen Monomeren hydriert.

Besonders bevorzugt werden Copolymerisate (c) in den thermoplastischen Formmassen verwendet, die ausgewählt sind aus der Gruppe der

i) statistisch aufgebauten hydrierten Copolymerisaten mit 10 bis 50 Gew.% Styrol und 90 bis 50 Gew.% Butadien und/oder Isopren,

ii) linear oder sternförmig aufgebauten hydrierte Blockcopolymerisate der allgemeinen Formel

$$(AB)_nX \text{ oder } (BA)_nX$$

worin n 2 bis 8 ist und die A-Blöcke aus Styrol, α-Methylstyrol, o- oder p-Methylstyrol und/oder p-tert.-Butylstyrol bestehen und die B-Blöcke die statistisch aufgebaut und hydrierte Copolymerisate darstellen bestehen aus 5 bis 30 Gew.-Teilen eines der genannten monoalkylaromatischen Kohlenwasserstoffe und 95 bis 70 Gew.-Teile eines der genannten Diene. Die A-Blöcke machen 10 bis 40 Gew.-Teile des gesamten Blockpolymeren aus und das Zentrum X wird durch Kopplung mit einem polyfunktionellen Kopplungsmittel gebildet,

iii) hydrierte Blockpolymerisate der allgemeinen Formel $(AB)_X$, worin X gleich 1 bis 5 ist, die aufgebaut sind aus 10 bis 40 Gew.-Teilen A-Blöcken, die bestehen aus Styrol, α-Methylstyrol, o- oder p-Methylstyrol und/oder p-tert.-Butylstyrol und 90 bis 60 Gew.-Teilen B-Blöcken, die statistisch aufgebaute hydrierte Copolymerisate darstellen mit 5 bis 30 Gew.-Teilen eines der genannten monoalkenylaromatischen Kohlenwasserstoffe und 95 bis 70 Gew.-Teilen Butadien/Isopren und/oder Pentadien.

Die Blockcopolymerisate (d) können ebenfalls linear oder verzweigt aufgebaut sein. Sie enthalten grundsätzlich mindestens einen Blockanteil, der aus Styrol, α-Methylstyrol, o- oder p-Methylstyrol und/oder p-tert.-Butylstyrol bestehen und einen elastomeren Zentralblock, der aus konjugierten Dienkohlenwasserstoffen aufgebaut ist, wie Butadien-Isopren und/oder Pentadien. Dabei kann der elastomere Block hydriert sein. Der Anteil des Elastomerblocks beträgt 95 bis 40 Gew.%.

Besonders bevorzugt werden Blockpolymere (d), die ausgewählt sind aus der Gruppe der

k) hydrierten $(AB)_X$-Blockpolymerisate, worin X 1 oder 2 ist und das aus 10 bis 40 Gew.% A-Blöcken besteht, die aus Styrol und/oder α-Methylstyrol bzw. p-Methylstyrol aufgebaut sind und B-Blöcken, die aus Butadien oder Isopren bestehen.

kk) hydrierten ABA-Blockpolymerisate mit A-Blöcken in einem Anteil von 10 bis 40 Gew.% auf das gesamte Blockcopolymerisat und aufgebaut aus Styrol, α-Methylstyrol und/oder para-Methylstyrol und elastomeren B-Blöcken, die aus Butadien und/oder Isopren bestehen.

kkk) hydrierten sternförmig aufgebauten Blockpolymerisate, die 10 bis 50 Gew.% polymerisierte vinylaromatische Blöcke enthalten, die aus Styrol, α-Methylstyrol und/oder para-Methylstyrol bestehen und polymerisierten Dienkohlenwasserstoffblöcken, die aus Butadien und/oder Isopren bestehen.

Darüber hinaus kann die bevorzugte Formmasse auch noch Hilfs- und Zusatzstoffe wie feuerhemmende Mittel aus der Gruppe der aromatischen Phosphate Phosphite, Phosphone und Phosphinoxide, Verstärkungsmittel wie Glasfasern, organische und mineralische Füllstoffe sowie Stabilisatoren, Verarbeitungshilfsmittel, wie Polyethylenwachse, Farbstoffe und die sonst bisher für die Formmassen bekannt gewordenen Zusatzstoffe sowie weitere mit dem Matrixpolymerengemisch mischbare Polymere wie SMSA-Copolymerisate, SAN-Copolymerisate, Styrol-(Meth)acrylsäure-Copolymerisate, Styrol-(Meth)acrylsäurealkylester-Copolymerisate mit $C_1$- bis $C_4$-Alkylresten, Polyamide, Polyetherimide, Polyacrylate und alle anderen bisher mit Polyphenylenether als mischbar bekannt gewordenen Polymerisate enthalten.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die thermoplastischen Formmassen können glasklare und schlagfest modifizierte Styrolpolymerisate (Komponente b) und Polyphenylenether (Komponente a) in beliebigen Mengen, beispielsweise in Mengen von 0 bis 60 Gew.% Styrolpolymerisat und 95 bis 25 Gew.% Polyphenylenether enthalten. Für die Herstellung von Formteilen eignen sich insbesonders solche Formmassen, die 10 bis 50 Gew.% schlagfest modifizierte Styrolpolymerisate und 90 bis 30 Gew.% Polyphenylenether enthalten. Zusätzlich enthalten die erfindungsgemäßen Formmassen 1 bis 30, vorzugsweise 5 bis 20 Gew.-Teile,

bezogen auf 100 Gew.-Teile der Mischung eines Copolymerisates c) und 1 bis 30, vorzugsweise 2 bis 10 Gew.-Teile eines Blockcopolymerisates d).

Komponente a)

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein α-ständiger tert. Wasserstoffatom besitzen, Halogenkohlenwasserstoffe, Phenylreste und Kohlenwasserstoffoxi-Reste tragen. So kommen in Frage: Poly(2,6-dichlor-1,4-phenylen)-ether, Poly(2,6-diphenyl-1,4-phenylen)ether, Poly(2,6-di-methoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Ganz besonders bevorzugt werden Poly(2,6-dimethyl-1,4-phenylen)ether mit einer Grenzviskosität zwischen 0,40 und 0,66 dl/g (gemessen in Chloroform bei 30°C).

Die aromatischen Polyether können durch Selbstkondensation der entsprechend einwertigen Phenole durch Einwirken von Sauerstoff in Gegenwart eines Katalysatorsystems, wie es beispielsweise in den US-PS 3 219 625, 3 306 875, 3 956 442, 3 965 069, 3 972 851 beschrieben ist, hergestellt werden.

Komponente b)

Als Styrolpolymerisate, die in der erfindungsgemäßen Formmasse nur gegebenenfalls enthalten sind, werden sowohl Styrolhomopolymerisate als auch schlagzäh modifizierte Styrolpolymerisate eingesetzt.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Die Homopolymerisate werden dabei nach den bekannten Verfahren, in Masse Lösung oder Suspension hergestellt (vgl. Ullmann's Enzyklopädie der technischen Chemie, Bd. 19, Seite 265, Verlag Chemie, Weinheim, 1980). Die Homopolymerisate können mittlere Molekulargewichte ($M_n$) von 1000 bis 200.000 aufweisen.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die gewünschten Teilchengröße der Kautschukphase eingestellt wird.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk, z.B. Polybutadien, Polyisopren und Mischpolymerisate des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt, der zwischen 25 und 99 liegt. Es können aber auch Acrylatkautschuke, EPDM-, Polybutylen- und Polyoctenamerkautschuke eingesetzt werden.

Die schlagzäh modifizierten Styrolpolymerisate besitzen einen Weichkomponentenanteil von 20 bis 60 Gew.%, vorzugsweise von 22 bis 45 Gew.%. Die Teilchengröße der Weichkomponente sollte im Bereich von 0,2 bis 6 µm liegen. Unter mittlerer Teilchengröße ist dabei das Gewichtsmittel zu verstehen wie es in der DE-OS 30 35 648 beschrieben ist. Besonders geeignet sind jedoch schlagzäh modifizierte Polymerisate, in denen die mittlere Teilchengröße, im Bereich von 0,6 bis 4 µm liegt und in denen 99 bis 85 Gew.% der Teilchen einen Teilchendurchmesser von 0,3 bis 0,9 µm und 1 bis 20 Gew.% der Teilchen einen Durchmesser von 3 bis 7 µm haben.

<u>Komponente c)</u>

Erfindungswesentlich sind die hydrierten Copolymerisate (c), die aufgebaut sind aus mindestens einem hydrierten statistisch aufgebauten linearen oder verzweigten Copolymerisat-Anteil, der seinerseits aufgebaut ist aus 5 bis 40 Gew.-Teilen mindestens eines monoalkenylaromatischen Kohlenwasserstoffs und 95 bis 60 Gew.-Teilen eines konjugierten Dienkohlenwasserstoffs, wobei die Gew.-Teile sich zu 100 addieren und die gegebenenfalls ein oder mehrere blockförmige Anteile enthalten, die aus mindestens einem alkenylaromatischen Kohlenwasserstoff aufgebaut sind.

Als monovinylaromatische Kohlenwasserstoffe kommen in Betracht: Styrol sowie Seitenketten-alkylierte und kernalkylierte Styrole wie o- und p-Methylstyrol, Ethylvinylbenzol, tert.-Butylstyrol und α-Methylstyrol. Die monovinylaromatischen Verbindungen können allein oder in Mischung

miteinander eingesetzt werden, vorzugsweise werden aber Styrol, α-Methylstyrol und p-Methylstyrol verwendet. Der Gewichtsanteil der monovinylaromatischen Verbindung an (C) beträgt 5 bis 60 Gew.%, vorzugsweise 10 bis 50 Gew.%.

Konjugierte Diene, die für die erfindungsgemäßen hydrierten Copolymerisatteile, insbesondere in Betracht kommen, sind beispielsweise Butadien-1,3, 2,3-Dimethylbutadien sowie Isopren und Pentadien. Diese Diene werden entweder allein oder in Mischung miteinander für die Herstellung der statistischen Copolymerisatteile herangezogen. Der Dien-Gehalt in den (Co)-Polymerketten oder im sternförmig aufgebauten Copolymerisatteilen kann 95 bis 40 Gew.%, insbesondere 90 bis 50 Gew.%, bezogen auf (c) betragen.

Die Herstellung der erfindungsgemäßen statistisch aufgebauten hydrierten Copolymerisate erfolgt nach bekannten Methoden der ionischen oder radikalischen Polymerisation nach Lösungs-, Emulsions- oder Suspensionsverfahren. Sie sind z.B. in folgenden Patentschriften beschrieben: US-PS 2 798 8532,m DE-PS 18 11 516, DE-OS 293 173, DE-OS 31 06 959. Durch Emulsionspolymerisation hergestellte statistisch aufgebaute Co- oder Terpolymerisate können nach der in D.C. Backley, Emulsion Polymerisation, Allied Science Publ. Ltd., London (1975), Seite 418 ff. und den in Houben-Weyl, Thieme-Verlag, Stuttgart, Bd. 14/11 (1961), Seite 674 ff. hergestellt und analog obengenannter Patentschriften hergestellt werden.

So ist z.B. eine bevorzugte Methode zur Herstellung und Hydrierung statistischer Copolymerer in den Patentschriften DE-OS 31 06 959, US 2 798 853 und DE-PS 18 11 516 beschrieben.

Um Copolymerisate aus Styrol und Butadien in der gewünschten monomeren Zusammensetzung zu erhalten, werden zweckmäßig Mischungen aus Styrol und Butadien in Lösungsmitteln gelöst und mit Lithiumalkylkatalysatoren in Gegenwart geeigneter Basen als Randomizer polymerisiert, wobei die Mischungen den Anteil an Monomeren enthalten, der im Copolymerisat einpolymerisiert sein soll. Als Lösungsmittel für die Polymerisation eignen sich zweckmäßig geradkettige und verzweigte aliphatische Kohlenwasserstoffe wie z.B. n-Pentan, n-Octan, n-Dekan, Isopentan, Isooctan, 2,3-Dimethylbutan, sowie einfache oder substituierte cycloaliphatische und aromatische Kohlenwasserstoffe wie z.B. Cyclopentan, Cyclohexan, Methylcyclohexan, Dekalin, Benzol, Toluol, Ethylbenzol, Cumol, Mesitylen, Tetralin sowie jede beliebige Mischung der aliphatischen, cycloaliphatischen und aromatischen Kohlenwasserstoffe. Vorteilhaft eignet sich als Lösungsmittel Cyclohexan.

Die Monomerenkonzentration im Lösungsmittel liegt vorteilhaft zwischen 20 und 26 %. Es ist zweckmäßig, die Copolymerisation so zu führen, daß die erhaltenen, nicht hydrierten Copolymerisate ein Molekulargewicht haben, das im Bereich zwischen 20.000 und 250.000 liegt. Das Molekulargewicht wird mittels Gelpermeationschromatographie bestimmt und als sogenanntes "Peakmolekulargewicht" angegeben (Eichstandards: eng verteiltes Polystyrol, Temperatur 23°C, Lösungsmittel Tetrahydrofuran). Um diesen Molekulargewichtsbereich zu erhalten, verwendet man zweckmäßig Lithiumalkylkatalysatoren in Mengen von 0,5 bis 10 Mol/100 kg, bezogen auf das Monomerengemisch.

Als Initiatoren für die Polymerisation eignen sich von den Lithiumalkylen insbesondere Methyllithium, Ethyllithium, n-, sek.-, tert.-Butyllithium, Isopropyllithium, vorzugsweise wird n- oder sek.-Butyllithium eingesetzt.

Der Randomizer wird in Mengen von 0,01 bis 2 Gew.%, bezogen auf Gesamtlösungsmittel, eingesetzt. Als Randomizer kommen alle literaturbekannten Basen in Frage wie z.B. Anisol, Dimethylglykol, Tetramethylethylendiamin und Tetrahydrofuran, um nur einige zu nennen. Bevorzugt ist Tetrahydrofuran. Lineare statistische Copolymerisate erhält man in bekannter Weise durch Abbruch der "lebenden" Lösung mit protonenaktiven Stoffen.

Verzweigte statistische Copolymerisate lassen sich nach der Lehre der DE-OS 29 31 736 in besonders guten Ausbeuten herstellen. Hierzu werden die "lebenden" Anionen mit geeigneten polyfunktionellen Kupplungsmitteln wie beispielsweise Polyepoxide, wie epoxidiertes Leinsamenöl, Polyisocyanate, beispielsweise Benzo-1,2,4-triisocyanat, Polyketone, Polyanhydride, wie beispielsweise das Dianhydrid der Pyromellithsäure oder Polyhalogenide gekoppelt. Ebenso können auch Dicarbonsäureester, z.B. Diethyladipat oder ähnliche, als Kupplungsmittel verwendet werden. Eine weitere bevorzugte Gruppe von Kupplungsmitteln sind die Siliciumhalogenide, insbesondere Siliciumtetrachlorid, Siliciumtetrabromid, Dimethyldichlorsilan, Trichlorethylsilan oder 1,2-Bis(methyldichlorsilyl)-ethan. Weiterhin können als Kupplungsmittel auch Polyvinylaromaten, insbesondere Divinylbenzol eingesetzt werden, wie es beispielsweise in der US-PS 3 280 084 beschrieben ist. In diesem Fall addieren sich einige Divinylbenzol-Einheiten unter Vernetzung zu einem Verzweigungszentrum, über das die vorgeformten Polymerisatblöcke miteinander verbunden werden.

Vorzugsweise wird ein tri- oder tetrafunktionelles Kupplungsmittel der genannten Art oder Divinylbenzol eingesetzt. Das polyfunktionelle Kupplungsmittel wird dabei der Reaktionslösung im allgemeinen in Mengen zugegeben, die äquivalent sind zu der Gesamtmenge der lebenden Polymerblöcke, d.h. zur Anzahl der aktiven Lithium-Kohlenstoff-Bindungen in den zuvor gebildeten linearen Copolymerisatblöcken. Die Umsetzung der aktiven, linearen Copolymerisate mit dem Kupplungsmittel erfolgt dabei vorzugsweise unter den gleichen Reaktionsbedingungen wie die vorangegangene Polymerisation der Monomeren.

Die hydrierten Blockcopolymerisate (c) der oben angegebenen allgemeinen Struktur können linear oder verzweigt aufgebaut sein und enthalten jeweils nicht-elastomere A-Blöcke und elastomere B-Blöcke, deren Herstellung oben beschrieben wurde. Die Blöcke A und B können scharf getrennt oder einen Tapered-Übergang aufweisen. Bekannterweise werden Tapered-Übergänge durch Polymerisation einer Mischung der Monomeren der Blöcke A und B, also von Butadien und Styrol erzeugt. Die Zugabe des zweiten Monomeren nach beendeter Polymerisation des ersten führt zu scharfen Blockübergängen.

Nach beendeter anionischer Polymerisation werden die aktiven Lithiumcarbanionen vor dem Hydrieren durch Zugabe von protonenaktiven Substanzen wie Wasser, Alkohol oder Säuren abgebrochen oder durch Zusatz von polyfunktionellen Kupplungsmitteln gekoppelt.

Das Hydrieren der Butadienphase des Copolymerisates erfolgt nach bekannten Verfahren. Dabei ist darauf zu achten, daß überwiegend die vom Butadien herrührenden Doppelbindungen hydriert werden und ein Hydrieren der aromatischen Systeme vermieden wird. Das Hydrieren kann beispielsweise durch Umsetzen der Polymerisate mit Wasserstoff bei Drücken zwischen 5 und 30 bar, insbesondere 10 bis 20 bar und Temperaturen im Bereich von 50 bis 200°C, insbesondere 70 bis 150°C, in Gegenwart von Übergangsmetallkatalysatoren erfolgen. Dabei ist es erforderlich, mindestens 95 %, insbesondere 97 %, der olefinischen Doppelbindungen zu hydrieren. Als Katalysatoren eignen sich z.B. homogene Ni/Al-Katalysatorsysteme, hergestellt aus Ni-II-octoat bzw. -acetylacetonat, (Bis-(2,4-pentadienato)-nickel) und Al-triethyl bzw. -triisobutyl. Man verwendet zweckmäßig den Katalysator in Mengen von 0,3 Mol/kg bis 7,0 mMol/kg, bezogen auf Ni und das Gewicht des zu hydrierenden Polymeren.

Die Aufarbeitung der hydrierten Copolymerisate (c) erfolgt durch Entfernung des Lösungsmittels durch Dampfstrippen oder mittels Extruderentgasung. Die Aufarbeitung kann aber auch zusammen mit den Komponenten (a) und (d) der erfindungsgemäßen Formmasen erfolgen.

Komponente d)

Die linear oder sternförmig aufgebauten elastomeren Blockcopolymeren der Komponente (d) der erfindungsgemäßen Formmassen können hydriert oder nicht hydriert sein. Sie sind allgemein bekannt und im Handel erhältlich. Dieselben sind beispielsweise in "Polymer Chemistry of Synthetic Elastomers", herausgegeben von Kennedy et al, Interscience Publishers, Bd. 23, Teil II (1969), Seiten 553 bis 559, beschrieben. Der Offenbarungsgehalt dieser Literaturstelle wird durch diese Bezugnahme in vollem Umfange in die vorliegende Anmeldung aufgenommen. Andere Beschreibungen finden sich in den US-Patenten 3 251 905, 3 431 323, 3 670 054 und 3 231 635, deren Offenbarungsgehalt durch diese Bezugnahme ebenfalls in die vorliegende Anmeldung aufgenommen wird.

Bei den in den Blockcopolymeren (d) enthaltenen Blöcken A kann es sich um thermoplastische, Homopolymere oder Copolymere handeln, die aus einer vinylaromatischen Verbindung hergestellt sind, worin der aromatische Anteil entweder mono- oder polycyclisch sein kann. Beispiele umfassen Styrol, -Methylstyrol, Vinyltoluol, Vinylxylol, Ethylvinylxylol und Vinylnaphthalin sowie Mischungen derselben.

Der Zentralblock B ist ein elastomeres Polymer, abgeleitet von einem konjugierten Dienkohlenwasserstoff, beispielsweise 1,3-Butadien, 2,3-Dimethylbutadien, Isopren und 1,3-Pentadien sowie Mischungen derselben.

Das Molekulargewicht eines jeden Endblocks A liegt vorzugsweise im Bereich von etwa 5000 bis etwa 100.000, während das Molekulargewicht des Zentralblockes B vorzugsweise im Bereich von etwa 25.000 bis etwa 250.000 liegt.

Falls gewünscht, können die Blockcopolymeren nachbehandelt werden, um den Gummianteil des Copolymeren zu hydrieren.

Die Hydrierung kann, wie bereits bei der Komponentne (c) beschrieben, mit einer Vielzahl von Hydrierungskatalysatoren durchgeführt werden, wie beispielsweise Nickel-auf-Kieselgur, Raney-Nickel, Kupferchromat, Molybdänsulfid und fein verteiltem Platin oder anderen Edelmetallen auf einem Träger mit geringer Oberfläche.

Die AB-, ABA- und sternförmig aufgebauten Blockcopolymerisate enthalten einen A-Block-Anteil von insgesamt 5 bis 60 Gew.%. Besonders bevorzugt sind jedoch Blockcopolymerisate mit einem A-Block-Anteil von 10 bis 50 Gew.%, insbesondere von 12 bis 40 Gew.%. Elastomere Blöcke B sind bevorzugt in 90 bis 50, insbesondere 88 bis 60 Gew.% enthalten. Insbesondere sind die Blockpolymerisate Polystyrol-Polybutadien oder Polystyrol-Poly-(Butadien/Isopren)-Blockcopolymerisate und die ABA-Blockcopolymerisate vom Typ Polystyrol-Polybutadien-Polystyrol oder Polystyrol-Poly-(Butadien/Isopren)-Polystyrol. Die sternförmig aufgebauten Blockcopolymerisate sind vom Typ Polystyrol-Polybutadien und über polyfunktionelle Kopplungsmittel gekoppelt. In den genannten Polymerisaten kann der Butadien-Anteil hydriert oder auch nicht-hydriert sein.

Die Mischungen aus Polyphenylenether und den hydrierten Copolymerisaten die gegebenenfalls auch Styrolpolymerisate enthalten, können darüber hinaus auch Hilfs- und Zusatzstoffe wie feuerhemmende Mittel aus der Gruppe der aromatischen Phosphate und Phosphinoxide, Verstärkungsmittel wie Glasfasern, organische und mineralische Hilfsstoffe sowie Stabilisatoren, Verarbeitungshilfsmittel wie Polyethylenwachse oder auch Farbstoffe und die sonst bisher für die Formmassen bekannt gewordenen Zusatzstoffe sowie weitere mit dem Matrixpolymeren mischbare Polymeren, wie SMSA-Copolymerisate, SAN-Copolymerisate, Styrol-(Meth)acrylsäurecopolymerisate, Styrol-(Meth)acrylsäurealkylester-Copolymerisate, Polyamide, Polyetherimide, Polyacrylate und alle anderen mit Polyphenylenethern als verträglich bekannt gewordenen Polymerisate enthalten.

Die erfindungsgemäßen Formmassen besitzen neben einer hohen Wärmebeständigkeit und guten mechanische Eigenschaften, insbesondere eine gute Schlagzähigkeit und Bruchenergie und eine ausgezeichnete Fließfähigkeit und vorzügliche Verarbeitbarkeit. Die folgenden Beispiele dienen dazu, die Erfindung zu beschreiben, ohne daß damit eine Begrenzung der Erfindung beabsichtigt ist. Die angegebenen Teile sind Gewichtsteile, es sei denn es ist anders angegeben.

Beispiele und Vergleichsbeispiele

Komponente (a)

Es wurde ein Poly(2,6-dimethyl-1,4-phenylen)ether mit einer Grenzviskosität von 0,6 dl/g (gemessen in Chloroform bei 30°C) und einem Restkupfergehalt von 4 ppm, bezogen auf das Polymerisat eingesetzt. Der Polyphenylenether war nach den Beispielen der DE-OS 30 35 599 (= EP 81 708) hergestellt worden.

Komponente (b)

Folgende Styrolpolymerisate wurden eingesetzt:

B1: Ein Polystyrol mit einem Molekulargewicht von 140.000 (viskosimetrische Messung im Benzol bei 25°C).

B2: Ein schlagfestes Polystyrol mit einer mittleren Teilchengröße (Gewichtsmittel) von 0,5 µm und einem Polybutadien-Anteil von 9 Gew.%, hergestellt gemäß DE-OS 30 35 648.

B3: Ein schlagfestes Polystyrol mit einer mittleren Teilchengröße (Gewichtsmittel) von 6,4 µm und einem Polybutadien-Anteil von 8 Gew.%, hergestellt gemäß DE-OS 30 35 648.

Komponente (c)

Folgende hydrierte Copolymerisate wurden eingesetzt:

C1: Ein statistisch aufgebautes, lineares hydriertes Styrol-Butadien-Copolymerisat mit einem Styrol-Anteil von 25 Gew.%, hergestellt gemäß DE-OS 31 06 959. Das Copolymerisat hatte eine Glastemperatur von -58°C (nach K.H. Illers und H. Breuer, Kolloid Zeitschrift 176 (1961), Seite 110) und einem Molekulargewicht von 80.000 (Peakmolekulargewicht ermittel durch Gelpermeationschromatographie mit Eichsubstanz-Polystyrol $M_w/M_n$ = 1 bei 23°C in Tetrahydrofuran). Bei allen nachfolgenden Blockpolymerisaten wurden gleiche Bestimmungsmethoden der Glastemperaturen und des Molekulargewichtes angewandt.

C2: Ein statistisch aufgebautes, sternförmiges hydriertes Styrol-Butadien-Copolymerisat mit einem Styrol-Anteil von 30 Gew.%, hergestellt gemäß DE-OS 29 31 736. Glastemperatur -57°C. Molekulargewicht 95.000.

C3: Ein lineares, hydriertes AB-Blockpolymerisat mit folgendem Aufbau:
A-Block: Polystyrol, Gewichtssumme 15 %
B-Block: hydriertes, statistisches Copolymerisat-Block, bestehend aus 20 Gew.% Styrol und 80 Gew.% Butadien
Glastemperatur: -57°C
Molekulargewicht: 70.000.

C4: Ein hydriertes $(AB)_2X$-Blockcopolymerisat mit folgendem Aufbau:
A-Blöcke: 20 Gew.% bestehend aus Polystyrol
B-Blöcke: hydriertes statistisches Styrol-Butadien-Copolymerisat bestehend aus 15 Gew.% Styrol und 85 Gew.% Butadien
X: Si durch Kopplung mit Dimethyldichlorsilan
Glastemperatur: -54°C
Molekulargewicht: 80.000

Komponente (d)

Folgende hydrierte Blockcopolymerisate wurden eingesetzt:

D1: Ein AB-Blockcopolymerisat mit scharf getrenntem A-Block aus Polystyrol mit einem Anteil von 20 Gew.% und einem hydrierten Polybutadien-B-Block. Das Blockpolymerisate hatte eine Glastemperatur von -56°C. Molekulargewicht 75.000.

D2: Ein ABA-Blockpolymerisat mit scharf getrennten A-Blöcken, bestehend aus Polystyrol, die zusammen 30 Gew.% ausmachen und einem hydrierten Polybutadien-Block-B mit einem Gewichtsanteil von 70 Gew.%. Glastemperatur -52°C. Molekulargewicht 50.000.

Zusatzstoffe e)

E1: Triphenylphosphat
E2: Ethylen-Buten-1-Copolymerisat mit einem Buten-1-Anteil von 8 Gew.%, einer Dichte von 0,919 ($g/cm^3$) und einem Meltindex bei 190°C und 21,6 kp und 1 (g/10 min)
E3: Styrol-Maleinsäureanhydrid-Copolymerisat mit einem MSA-Anteil von 9 Gew.% und einer Viskositätszahl von 70 (dl/g) (gemessen 0,5 % in DMF bei 25°C
E4: Titandioxid mit einer mittleren Teilchengröße von 0,5 µm
E5: Trisnonylphenylphosphit

Herstellung der Formmassen:

Die in der Tabelle angegebenen Gewichtsteile der Komponenten a, b, c und der Zusatzstoffe d wurden miteinander in einem Fluidmischer vermischt und auf einem Zweischneckenextruder bei 280°C aufgeschmolzen, homogenisiert und granuliert.

Prüfung der Formmassen:

Aus den genannten Mischungen wurde mittels einer Spritzgußmaschine bei 280°C Spritztemperatur Prüfkörper hergestellt.

Es wurde die Bruchenergie nach DIN 350 443, Blatt 1 bis 23°C gemessen und die Kerbschlagzähigkeit nach DIN 53 433 bei 23°C.

Die Fließfähigkeit wurde anhand des Schmelzindexes nach DIN 53 735 ermittelt und die Wärmeformbeständigkeit gemäß DIN 53 460/B bestimmt.

Das Verarbeitungsverhalten im Spritzguß wurde auf einer Einschneckenspritzgußmaschine, Fabrikat IDRA, Typ M+B 120S-4200 überprüft (Zuhaltekraft 12.000 KN, Einspritzvolumen 3200 $cm^3$ eff). Es wurde eine Fernseherrückwand mit folgenden technischen Daten als Spritzling verwendet:

Mittleres Gewicht des Spritzlings betrug 1.800 kg

Die Abmessung des Spritzlinges (Länge/Breite/Höhe in mm) betrug 750/490/150.

Der maximale Fließweg FW/mittlere Wanddicke WD in mm ist 411/3.

FW/WD-Verhältnis ist 137:1.

Angußart und Abmessungen: Kegel in mm 7,5/10,5; Länge 90.

Bei der Herstellung wurden folgende Maschinendaten eingehalten:

Temperaturführung im Plastifizierungszylinder (°C) wahlweise für die einzelnen Schüsse:

230/230/240/240/240
230/240/240/250/265
250/250/260/270/280
260/260/260/270/290

Temperatur in der Angußzone betrug 60°C. Die Temperatur im Werkzeug betrug: Gesenkboden 85°C, Gesenkmantel 85°C; Kern 70°C; Auswerferstempel 60°C, der Staudruck in bar war gleich Null (offene Düse)
Einspritzzeit in Sekunden: 3.
Nachdruckzeit in Sekunden: 1,2.
Abkühlzeit in Sekunden: 38.

Pausenzeit in Sekunden: 0
Gesamtzykluszeit in Sekunden: 60
Schneckendrehzahl in Minuten$^{-1}$: 36.

Das Verarbeitungsverhalten wurde über den Schmelzfließindex und die Verarbeitungsbreite beurteilt. Die Verarbeitungsbreite ist der Druckbereich, in dem die Formteile keine Beanstandungen aufweisen. Der Bereich wird bei tiefem Spritzdruck durch den optimalen Spritzdruck begrenzt, d.h. die Formteile weisen keine Einfallstellen mehr auf. Die obere Grenze ergibt sich aus dem Spritzdruck, bei dem die Formteile gerade noch entformt werden können. Oberhalb dieser Grenze wird die Form überfüllt. Je größer dieser Bereich ist, umso besser, d.h. mit umso geringeren Schwierigkeiten läßt sich ein Polymerisat verarbeiten. Eine hohe Verarbeitungsbreite ist erwünscht, um z.B. bei Druckschwankungen oder Schwankungen der Materialeigenschaften, die Ausfallrate an Spritzgußformlingen möglichst niedrig halten zu können. Die Tabelle enthält deshalb die Verarbeitungstemperatur in °C sowie der zu diesen Verarbeitungstemperaturen ermittelte optimale Spritzdruck in bar. Im Anschluß daran folgt eine Spalte, in der die Verarbeitungsbreite den jeweiligen Verarbeitungstemperaturen und dem ermittelten optimalen Spritzdruck zugeordnet ist. Die Tabelle schließt ab mit einer Spalte, in der Bemerkungen, z.B. über eventuelle Schäden (Angußreißer = Risse am Anguß; Schieferbruch = schiefriger Bruch im Angußbereich) an den erhaltenen Spritzgußformteilen enthalten sind.

Die Ergebnisse der Tabelle verdeutlichen, daß die erfindungsgemäßen Formmassen ein wesentlich besseres Verarbeitungsverhalten, insbesondere eine fehlerfreie Verarbeitung in einem breiten Verarbeitungsbereich aufweisen. Darüber hinaus ist die multiaxiale Zähigkeit, gemessen in Plastechon-Durchstoßtest, wesentlich verbessert. Vergleiche hierzu insbesondere die Ergebnisse der Versuche 1, 5 und 8 und der Vergleichsversuche A und C.

0176060

Tabelle

| Beispiel | Zusammensetzung der Mischung (Gew.%) Komponente a) | b) | c) | d) | e) | Vincattemperatur (°C) | Kerbschlagzähigkeit ($kJ/m^2$) | Bruchenergie (Nm) [Variationskoeffizient (%)] | Meltindex 21,6 Kp, (g/10') | Spritztemperatur (°C) | Spritzdruck (bar) | Verarbeitungsbreite | Bemerkungen |
|---|---|---|---|---|---|---|---|---|---|---|---|---|---|
| 1 | 60 | - | 29 ($C_1$) | 15 ($D_1$) | 1 ($E_2$)<br>2 ($E_5$) | 157 | 27 | 49 (5) | 19 | 290<br>300 | 1310<br>1120 | 90<br>100 | keine |
| 2 | 60 | - | 23 ($C_3$) | 15 ($D_2$) | 1 ($E_2$)<br>2 ($E_2$) | 158 | 29 | 52 (11) | 25 | 210<br>300 | 1250<br>1080 | 110<br>110 | keine |
| 3 | 60 | - | 23 ($C_4$) | 15 ($D_2$) | 1 ($E_2$)<br>2 ($E_2$) | 158 | 26 | 50 (8) | 23 | 210<br>300 | 1250<br>1200 | 110<br>110 | keine |
| 4 | 45 | 20 ($B_1$) | 15 ($C_2$) | 10 ($D_1$) | 1 ($E_2$)<br>7 ($E_4$)<br>2 ($E_5$) | 136 | 19 | 54 (12) | 72 | 290<br>300 | 980<br>850 | 120<br>120 | keine |
| 5 | 45 | 23 ($B_2$)<br>3 ($B_3$) | 14 ($C_4$) | 8 ($D_2$) | 1 ($E_2$)<br>4 ($E_4$)<br>2 ($E_5$) | 133 | 21 | 55 (13) | 64 | 290<br>300 | 1040<br>920 | 110<br>120 | keine |
| 6 | 40 | 27 ($B_2$)<br>3 ($B_3$) | 15 ($C_4$) | 12 ($D_2$) | 1 ($E_2$)<br>2 ($E_5$) | 128 | 23 | 59 (4) | 81 | 280<br>290 | 1100<br>980 | 120<br>120 | keine |
| 7 | 40 | 27 ($B_2$)<br>3 ($B_3$) | 14 ($C_4$) | 8 ($D_2$) | 1 ($E_2$)<br>5 ($E_3$)<br>2 ($E_5$) | 132 | 19 | 48 (15) | 70 | 290<br>300 | 1020<br>900 | 110<br>110 | keine |
| 8 | 45 | 18 ($B_2$)<br>2 ($B_3$) | 12 ($C_4$) | 10 ($D_2$) | 6 ($E_1$)<br>1 ($E_2$)<br>4 ($E_4$)<br>2 ($E_5$) | 122 | 24 | 57 (3) | 117 | 270<br>380 | 1130<br>1000 | 110<br>120 | keine |

<u>Tabelle</u>

| Beispiel | Zusammensetzung der Mischung (Gew.%) Komponente a) | b) | c) | d) | e) | Vincat-temperatur (°C) | Kerbschlagzähigkeit ($kJ/m^2$) | Bruchenergie (Nm) [Variationskoeffizient (%)] | Meltindex 21,6 Kp, (g/10') | Spritztemperatur (°C) | Spritzdruck (bar) | Verarbeitungsbreite | Bemerkungen |
|---|---|---|---|---|---|---|---|---|---|---|---|---|---|
| A | 45 | 23 ($B_2$)<br>3 ($B_3$) | - | 22 ($D_2$) | 1 ($E_2$)<br>4 ($E_4$)<br>2 ($E_5$) | 131 | 17 | 40 (22) | 52 | 290<br>300 | 1120<br>1050 | 50<br>60 | Angußreißer<br>Delamination |
| B | 60 | - | - | 38 ($D_2$) | 1 ($E_2$)<br>2 ($E_5$) | 152 | 16 | 30 (47) | 10 | 300<br>310 | 1260<br>1110 | 30<br>30 | Schieferbruch<br>Delamination |
| C | 45 | 18 ($B_2$)<br>2 ($B_3$) | - | 22 ($D_2$) | 6 ($E_1$)<br>1 ($E_2$)<br>3 ($E_3$)<br>2 ($E_5$) | 117 | 19 | 37 (51) | 83 | 290<br>300 | 1120<br>1000 | 40<br>90 | Schieferbruch<br>Delamination |

Patentansprüche

1. Thermoplastische Formmassen auf der Grundlage von

(a) Polyphenylenethern oder Gemischen aus Polyphenylenethern und

(b) Styrolpolymerisaten, dadurch gekennzeichnet, daß sie außerdem

(c) ein hydriertes statistisch aufgebautes Copolymerisat aus 5 bis 60 Gew.-Teilen mindestens eines monoalkenylaromatischen Kohlenwasserstoffs, 95 bis 40 Gew.-Teilen eines konjugierten Diens, wobei die Gew.-Teile sich zu 100 addieren und

(d) ein Blockpolymerisat enthalten, das einen A-Block enthält, der aus mindestens einem monoalkenylaromatischen Kohlenwasserstoff aufgebaut sind und einen B-Block enthält, der aus einem konjugierten Dien aufgebaut ist.

2. Thermoplastische Formmassen gemäß Anspruch 1, dadurch gekennzeichnet, daß die Komponente (c) außerdem einen Block-Anteil enthält, der aus mindestens einem monoalkenylaromatischen Kohlenwasserstoff aufgebaut ist.

3. Thermoplastische Formmasen nach Anspruch 1, dadurch gekennzeichnet, daß in der Komponente (d) der B-Block-Anteil hydriert ist.

4. Thermoplastische Formmassen gemäß Anspruch 1, dadurch gekennzeichnet, daß die Komponente (c) ausgewählt ist aus der Gruppe der Verbindungen

i) ein statistisch aufgebautes hydriertes Copolymerisat, bestehend aus 10 bis 50 Gew.-Teilen Styrol, α-Methylstyrol o-oder p-Methylstyrol und/oder p-tert.-Butylstyrol und 90 bis 50 Gew.-Teilen Butadien, Isopren und/oder Pentadien,

ii) ein hydriertes lineares oder sternförmig aufgebautes Blockcopolymerisat der allgemeinen Formel

$$(AB)_nX \text{ oder } (BA)_nX$$

worin n gleich 2 bis 8 ist und die A-Blöcke aus einem monoalkenylaromatischen Kohlenwasserstoff bestehen und die B-Blöcke ein statistisch aufgebautes Copolymerisat darstellen, das aus 5 bis 30 Gew.% eines monoalkenylaromatischen Kohlenwasserstoffs und 95 bis 70 % eines Diens bestehen, wobei die A-Blöcke zusammen 10 bis 40 Gew.% des gesamten Blockpolymerisates ausmachen und das Zentrum X durch Kupplung über ein polyfunktionelles Kupplungsmittel gebildet ist,

iii) ein hydriertes Blockpolymerisat der allgemeinen Formel $(AB)_X$ mit X gleich 1 bis 5, das aufgebaut ist aus 10 bis 40 Gew.-Teilen A-Blöcken, die aus einem monoalkenylaromatischen Kohlenwasserstoff bestehen und 90 bis 60 Gew.-Teilen B-Blöcken, die statistisch aufgebaute hydrierte Copolymerisate darstellen aus 5 bis 30 Gew.-Teilen eines monoalkenylaromatischen Kohlenwasserstoffs und 95 bis 70 Gew.-Teilen eines Diens.

5. Thermoplastische Formmassen gemäß Anspruch 1, dadurch gekennzeichnet, daß die Komponente (d) ausgewählt wird aus der Gruppe der Verbindungen

k) eines $(AB)_X$-Blockcopolymerisates, worin X gleich 1 bis 4 ist und die A-Blöcke aus polymerisierten alkenylaromatischen Kohlenwasserstoffen bestehen und die B-Blöcke aus Dienkohlenwasserstoffen aufgebaut sind,

kk) ein ABA-Blockcopolymerisat, worin die A-Blöcke aus alkenylaromatischen Kohlenwasserstoffen und die B-Blöcke aus Dienkohlenwasserstoffen aufgebaut sind,

kkk) ein sternförmig aufgebautes Copolymerisat, das aus polymerisierten alkenylaromatischen Blöcken und polymerisierten Dienkohlenwasserstoffblöcken besteht.

6. Thermoplastische Formmassen gemäß Anspruch 1 und 5, dadurch gekennzeichnet, daß die Dienkohlenwasserstoffanteile in den genannten Blockpolymerisaten hydriert sind.